# EUROPEAN PATENT SPECIFICATION

(11) **EP 1 831 032 B1**
(45) Date of publication and mention of the grant of the patent: **25.04.2012**
(21) Application number: 05858502.7
(22) Date of filing: 27.05.2005
(51) Int. Cl.: B42F 9/00, G11B 33/04

(54) **ARTICLE FOR HOLDING AN OBJECT**
ARTIKEL ZUM HALTEN EINES OBJEKTS
ARTICLE POUR TENIR UN OBJET

(30) Priority: 29.05.2004 GB 0412116
(43) Date of publication of application: 12.09.2007
(73) Proprietor: Dubois Limited, Corby, Northants NN17 5AE (GB)
(72) Inventor: HEIN, John, Leeds LS29 6EX (GB); FARRAR, Peter, Antony, Leeds LS29 6EX (GB)
(74) Representative: Coulson, Elizabeth Eve
(86) International application number: PCT/GB2005/002111
(87) International publication number: WO 2007/071887

(56) References cited:
- EP-A- 0 575 026
- WO-A-03/051747
- DE-C1- 4 036 882

## Description

The present invention relates to containers having at least one literature clip. The invention has particular relevance to containers and other articles for holding objects such as data storage media, including compact discs, DVD discs, tapes and cartridges (e.g. computer cartridges). The invention is not, however, limited to the field of data storage media, but is applicable generally to all types of containers for holding objects.

Recorded data, including audio data (e.g. music) and audio-visual data (e. g. films, television programs, or computer software, including computer games) are often supplied with literature, for example in the form of booklets. Such literature may provide information concerning the content of the data storage media, for example information concerning audio or audio-visual content, or instructions concerning computer software. With the ever-increasing range of such content, the range of literature booklet thicknesses has grown, to encompass slim booklets of a small number of pages (or even one or two sheets of paper), to thicker booklets of many pages. There is consequently a need for the containers holding the storage media and the accompanying literature to hold any thickness of booklet within a large range of thicknesses.

A media storage container including a literature clip for holding different thicknesses of literature booklets is proposed in international patent application WO 03/051747. This document discloses a clip that is able to move from a first position in which the clip is adapted to hold a relatively thin booklet, to a second position in which the clip is adapted to a hold a relatively thick booklet. The clip is moved from its first position to its second position and latched in place with respect to a wall of the container when in the second position.

DE4036882 discloses a clamp for holding a flat object. The clamp comprises two arms connected, at a common point, by a flexible connection, to a resilient portion.

The present invention seeks to provide a container with an improved literature clip.

Accordingly, a first aspect of the invention provides a container having at least one literature clip for receiving and holding both relatively thin literature booklets and relatively thick literature booklets inserted between the clip and a surface of the container, wherein the clip comprises a first resilient part mounted to the container and extending over the plane of said surface in a first direction and characterised by a second resilient part mounted at one end to the first resilient part and extending between the first resilient part and the plane of said surface in a second direction generally opposite to the first direction so, in a relaxed state, at least part of the second resilient part lies closer to the plane of said surface than the first resilient part whereby, when a relatively thin booklet is inserted between the clip and said surface, the second resilient part is deflected to an extent such that a face of the booklet is engaged by only the second resilient part and, when a relatively thick booklet is inserted between the clip and said surface, the second resilient part is deflected to an extent that a face of the booklet is engaged by both the first and second resilient parts which first and second resilient parts together provide a continuous abutment surface against which an upper portion of said relatively thick booklet is slidable as it is inserted.

Preferably, the container is adapted to hold relatively thin literature booklets comprising a single or double sheet of paper, or having a thickness in the range 1-2 mm and adapted to hold relatively thick literature booklets having a thickness in the range 3 - 8mm or greater.

Preferably, the container is adapted to hold relatively thick literature booklets having a thickness up to 10mm or 15mm or more.

Preferably, the first resilient part is attached to the container at one end and has a first portion which extends approximately perpendicular to the plane of said surface and a second portion which extends very approximately perpendicularly from the first portion over the plane of said surface.

Preferably, the first resilient part curves away from the plane of said surface at its free end to provide a lead-in for literature booklets.

Preferably, the first resilient part has an approximate 'S-bend' profile.

Preferably, the second resilient part extends from a free end region of the first resilient part.

Preferably, the second resilient part extends from the first resilient part with a single curve profile.

Preferably, the literature clip is formed from a plastics material.

Preferably, the literature clip is integrally moulded with the remainder of the container.

Preferably, the container has a base and a lid connected by a hinge, a plurality of said literature clips being provided on an inner surface of the lid.

Preferably, the base has one or more retaining devices for data storage media.

Preferably, the second resilient part extends from a portion of the first resilient part that is closest to said surface.

Preferred and optional features of the invention are described below and in the dependent claims.

Some embodiments of the invention will now be described, by way of example, with reference to the accompanying drawings, of which:
Figure 1 shows a container according to a preferred embodiment of the for housing data storage media;
Figure 2 shows a detail of a container according to the invention, similar to that of Figure 1; and
Figure 3 (views (a) and (b)) shows, schematically, how a preferred embodiment of a clip according to the invention can hold differing sizes of object.

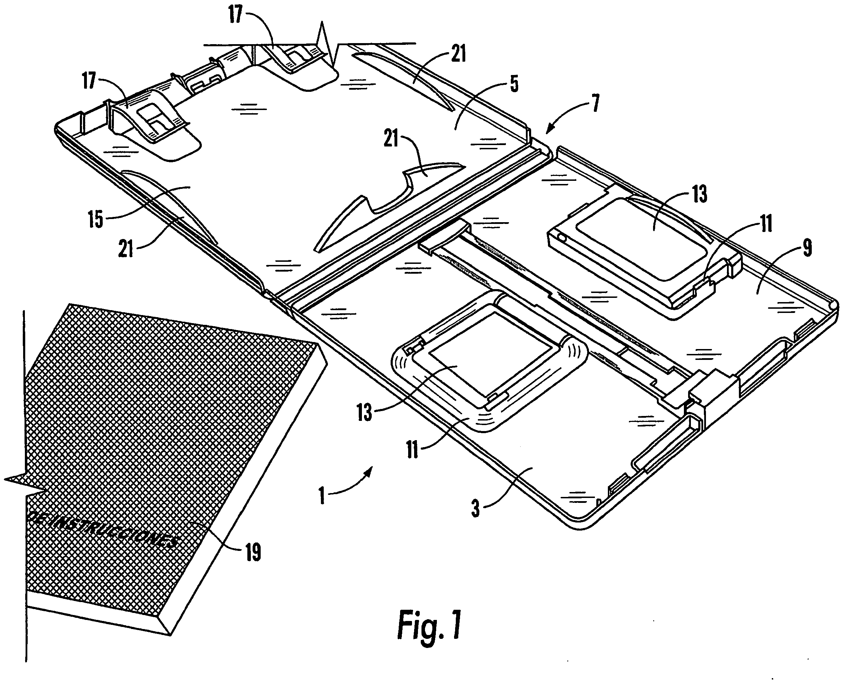

Figure 1 shows an embodiment of a container 1 according to the invention, in the form of a container for data storage media. The container 1 comprises a base 3, a lid 5, and a hinge arrangement 7 by which the base and the lid may be brought together to close the container. A surface 9 of the base 3, which is situated inside the container when the container is closed, includes retaining devices 11 for computer games cartridges 13. (Alternatively or additionally, the container could include retaining devices for compact discs, DVD discs, tapes, or other data storage media.)

A surface 15 of the lid 5 of the container 1, which is situated inside the container when the container is closed, includes a plurality (two as drawn) of clips 17 according to the invention. The clips 17 are literature clips for holding a literature booklet, such as the booklet 19. By means of the clips 17, together with retaining members 21 (in the form of upstanding wall features) also provided on the surface 15, the booklet 19 may be held on the interior surface 15 of the lid 5 of the container. The booklet 19 is held in place on the interior surface of the lid of the container both when the container is closed, and when the container is opened, until it is manually removed from the clips 17 and from the peripheral upstanding retaining members 21.

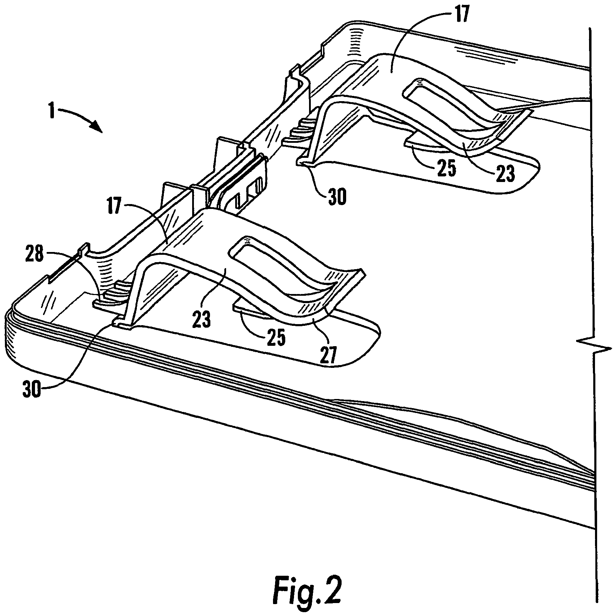

A detail of a container 1 according to the invention, which is similar to that shown in Figure 1 is shown in Figure 2. The detail shows two literature clips 17 according to the invention, provided on the interior surface 15 of the lid of the container. More specifically, each clip 17 comprises a first resilient part 23 and a second resilient part 25, both parts extending over the plane of the surface 15, and at least the first part 23 spaced apart from the plane of the surface. (The clips 17 actually extend over gaps provided in the surface 15, formed when the container is moulded.) Each clip 17 is attached to the remainder of the container 1 via the first part 23 of the clip, and not via the second part 25 of the clip. Instead, the second part 25 of the clip extends from the first part 23, and specifically extends from a free end region 27 of the first part 23 of the clip, in a direction generally opposing the direction in which the first part 23 extends. The end region 27 is in the form of an upwardly-curved "lead-in" of the clip, which facilitates the smooth insertion of a literature booklet (or other article) into the clip. The lead-in 27 is a lead-in for both the first part 23 and the second part 25.

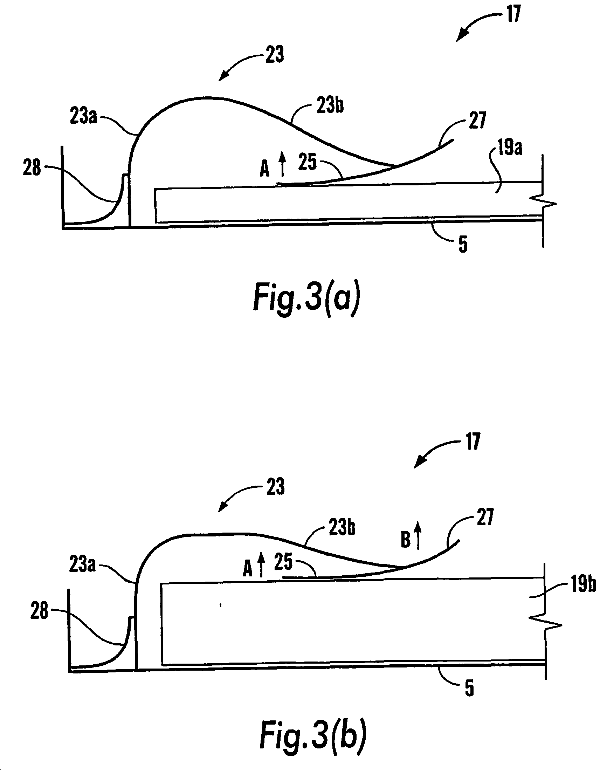

A first portion 23a (as indicated schematically in Figure 3) of the first part 23 of the clip 17 extends very approximately perpendicularly from the surface 15 of the container 1, as a first cantilever portion. A second portion 23b of the first part 23 of the clip extends very approximately perpendicularly from the first portion 23a as a second cantilever portion that extends over the surface 15 (and spaced apart from the surface 15). The first part 23 of the clip 17 may be regarded as having a distorted "S-bend" profile. The second part 25 of the clip 17 extends from the free end region 27 of the first part 23 with a single curve profile. At its closest approach to the plane of the surface 15, the second part 25 is closer to the plane of the surface than is the closest approach of the second portion 23b of the second part of the clip. For example, the closest approach of the portion 23b may lie approximately in the plane of the surface 15 (or 1-2 mm or less spaced therefrom), whereas the closest approach of the second part 25 may be approximately 3-8 mm (or greater) from the plane of the surface 15.

Also shown in Figure 2 are reinforcing ribs 28 that support the upright portions 23a of each clip 17, and cut-outs 30 in the surface 15 adjacent to where the portions 23a meet the surface 15, to reduce stress concentrations at these regions.

The functioning of the clips 17 of figures 1 and 2 in holding different thicknesses of booklets 19 is shown in Figure 3, views (a) and (b). In Figure 3 (a), a relatively thin booklet 19a is retained on the surface 15 of the lid 5 of the container, by a clip 17. Because the booklet 19a is relatively thin (i.e. it has a thickness in a range referred to herein as a "second thickness") it is retained by the resilience of the second part 25 of the clip. Specifically, the second part 25 of the clip has been flexed away from the surface 15 slightly, as indicated by arrow A. The resilience of the second part 25, which is provided at least to a degree by the resilience of the end region 27 of the first part 23 from which the second part extends, causes the second part 25 to grip the booklet and to hold it in place. There will also be some deflection of the end region 27 of the first part 23 of the clip.

In Figure 3(b), a thicker booklet 19b is retained in place by the clip 17. The thicker booklet has a thickness in a range referred to herein as a "first thickness", which is sufficient to cause the first part 23 of the clip 17 to flex away from the surface 15, as indicated by arrow B. The resilience of the first part 23 causes the first part 23 to grip the booklet and to hold it in place. Additionally, in order to accommodate the thicker booklet 19b, the second part 25 has also been flexed away from the surface 15 (and to move away from the surface 15 due to the movement of the first part 23 which carries the second part 25) as indicated by arrow A. Consequently, the booklet 19b is held both by means of the first part 23 and by means of the second part 25 of the clip 17, but primarily by means of the first part 23. the second portion 23b of the second part of the clip. For example, the closest approach of the portion 23b may lie approximately In the plane of the surface 15 (or 1-2 mm or less spaced therefrom), whereas the closest approach of the second part 25 may be approximately 3-8 mm (or greater) from the plane of the surface 15.

Also shown in Figure 2 are reinforcing ribs 28 that support the upright portions 23a of each clip 17, and cut-outs 30 in the surface 15 adjacent to where the portions 23a meet the surface 15, to reduce stress concentrations at these regions.

The functioning of the clips 17 of figures 1 and 2 in holding different thicknesses of booklets 19 is shown in Figure 3, views (a) and (b). In Figure 3 (a), a relatively thin booklet 19a is retained on the surface 15 of the lid 5 of the container, by a clip 17. Because the booklet 19a is relatively thin (i.e. it has a thickness In a range referred to herein as a "second thickness") it is retained by the resilience of the second part 25 of the clip. Specifically, the second part 25 of the clip has been flexed away from the surface 15 slightly, as indicated by arrow A. The resilience of the second part 25, which is provided at least to a degree by the resilience of the end region 27 of the first part 23 from which the second part extends, causes the second part 25 to grip the booklet and to hold it in place. There will also be some deflection of the end region 27 of the first part 23 of the clip.

In Figure 3(b), a thicker booklet 19b is retained in place by the clip 17. The thicker booklet has a thickness In a range referred to herein as a "first thlckness", which is sufficient to cause the first part 23 of the clip 17 to flex away from the surface 15, as indicated by arrow B. The resilience of the first part 23 causes the first part 23 to grip the booklet and to hold it in place, Additionally, in order to accommodate the thicker booklet 19b, the second part 25 has also been flexed away from the surface 15 (and to move away from the surface 15 due to the movement of the first part 23 which carries the second part 25) as indicated by arrow A. Consequently, the booklet 19b is held both by means of the first part 23 and by means of the second part 25 of the clip 17, but primarily by means of the first part 23.

## Claims

1. A container (1) having at least one literature clip (17) for receiving and holding both relatively thin literature booklets and relatively thick literature booklets inserted between the clip (17) and a surface (15) of the container (1), wherein the clip (17) comprises a first resilient part (23) mounted to the container (1) and extending over the plane of said surface (15) in a first direction and **characterised by** a second resilient part (25) mounted at one end to the first resilient part (23) and extending between the first resilient part (23) and the plane of said surface (15) in a second direction generally opposite to the first direction so, in a relaxed state, at least part of the second resilient part lies closer to the plane of said surface than the first resilient part whereby, when a relatively thin booklet is inserted between the clip (17) and said surface (15), the second resilient part (25) is deflected to an extent such that a face of the booklet is engaged by only the second resilient part (25) and, when a relatively thick booklet is inserted between the clip (17) and said surface (15), the second resilient part (25) is deflected to an extent that a face of the booklet is engaged by both the first and second resilient parts (23, 25) which first and second resilient parts together provide a continuous abutment surface against which an upper portion of said relatively thick booklet is slidable as it is inserted.

2. A container (1) as claimed in claim 1 adapted to hold relatively thin literature booklets comprising a single or double sheet of paper or having a thickness in the range 1-2mm and adapted to hold relatively thick literature booklets having a thickness in the range 3-8mm or greater.

3. A container (1) as claimed in claim 2 adapted to hold relatively thick literature booklets having a thickness up to 10mm or 15mm or more.

4. A container (1) as claimed in claims 1, 2 or 3 in which the first resilient part (23) is attached to the container (1) at one end and has a first portion (23a) which extends approximately perpendicular to the plane of said surface (15) and a second portion (23b) which extends very approximately perpendicularly from the first portion (23a) over the plane of said surface (15).

5. A container (1) as claimed in claim 4 in which the first resilient part (23) curves away from the plane of said surface (15) at its free end (27) to provide a lead-in for literature booklets.

6. A container (1) as claimed in claim 5 in which the first resilient part (23) has an approximate 'S-bend' profile.

7. A container (1) as claimed in any preceding claim in which the second resilient part (25) extends from a free end region (27) of the first resilient part (23).

8. A container (1) as claimed in any preceding claim in which the second resilient part (25) extends from the first resilient part (23) with a single curve profile.

9. A container (1) as claimed in any preceding claim in which the literature clip (17) is formed from a plastics material.

10. A container (1) as claimed in claim 9 in which the literature clip (17) is integrally moulded with the remainder of the container (1).

11. A container (1) as claimed in any preceding claim having a base (3) and a lid (5) connected by a hinge (7), a plurality of said literature clips (17) being provided on an inner surface (15) of the lid (5).

12. A container (1) as claimed in claim 11 in which the base (3) has one or more retaining devices (11) for data storage media (13).

13. A container (1) as claimed in any preceding claim in which the second resilient part (25) extends from a portion of the first resilient part (23) that is closest to said surface (15).

## Patentansprüche

1. Behälter (1), der wenigstens eine Literaturklammer (17) zum Aufnehmen und zum Halten von sowohl relativ dünnen Literaturbroschüren, als auch von relativ dicken Literaturbroschüren aufweist, die zwischen der Klammer (17) und einer Fläche (15) des Behälters (1) eingelegt sind, wobei die Klammer (17) einen ersten nachgebenden Abschnitt (23) aufweist, der an dem Behälter (1) befestigt ist und sich über die Ebene der Fläche (15) in eine erste Richtung erstreckt, **dadurch gekennzeichnet ist, dass** ein zweiter nachgebender Abschnitt (25), der an einen Ende des ersten nachgebenden Abschnitts (23) befestigt ist und sich zwischen dem ersten nachgebenden Abschnitt (23) und der Ebene der Fläche (15) in eine zweite Richtung erstreckt, und zwar im Wesentlichen entgegengesetzt zu der ersten Richtung, so dass in einem entspannten Zustand, wenigstens ein Teil des zweiten nachgebenden Abschnitts näher zu der Ebene der Fläche liegt, als der erste nachgebende Abschnitt, wodurch bei einem Einlegen einer relativ dünnen Broschüre zwischen der Klammer (17) und der Fläche (15), der zweite nachgebende Abschnitt (25) in einem Ausmaß abgelenkt wird, so dass eine Fläche der Broschüre nur durch den zweiten nachgebenden Abschnitt (25) in Eingriff genommen wird, und beim Einlegen einer relativ dicken Broschüre zwischen der Klammer (17) und der Fläche (15), sich der zweite nachgebenden Abschnitt (25) in einen Ausmaß abgelenkt wird, so dass eine Fläche der Broschüre sowohl durch den ersten und den zweiten nachgebenden Abschnitt (23, 25) in Eingriff genommen wird, wobei der erste und der zweite nachgebenden Abschnitt zusammen eine durchgängige Widerlagerfläche bereitstellen, gegen die ein oberer Abschnitt der relativ dicken Broschüre beim Einlegen gleiten kann.

2. Behälter (1), gemäß Anspruch 1, der angepasst ist, um relativ dünne Literaturbroschüren zu halten, und zwar solche, die einen einseitigen oder doppelseitigen Papierbogen umfassen, oder eine Dicke von 1-2mm aufweisen und der angepasst ist, um relativ dicke Literaturbroschüren zu halten, und zwar solche, die eine Dicke von 3-8mm oder größer aufweisen.

3. Behälter (1), gemäß Anspruch 2, der angepasst ist, um relativ dicke Literaturbroschüren zu halten, die eine Dicke von bis zu 10mm oder 15mm oder mehr aufweisen.

4. Behälter (1), gemäß Anspruch 1, 2 oder 3, wobei der erste nachgebende Abschnitt (23) an einem Ende des Behälters (1) befestigt ist und einen ersten Abschnitt (23a) aufweist, der sich annähernd senkrecht zu der Ebene der Fläche (15) erstreckt und einen zweiten Abschnitt (23b) aufweist, der sich mehr oder weniger senkrecht von dem ersten Abschnitt (23a) über die Ebene der Fläche (15) erstreckt.

5. Behälter (1), gemäß Anspruch 4, wobei sich das erste nachgebende Abschnitt (23) an seinem freien Ende weg von der Ebene der Fläche (15) krümmt, um einen Einlass für Literaturbroschüren zur Verfügung zu stellen.

6. Behälter (1), gemäß Anspruch 5, wobei der erste nachgebende Abschnitt (23) ein etwa S-förmig gebogenes Profil aufweist.

7. Behälter (1), gemäß einem der vorherigen Ansprüche, wobei der zweite nachgebende Abschnitt (23) sich von einer freien Endabschnitt (27) des ersten nachgebenden Abschnitts (23) erstreckt.

8. Behälter (1), gemäß einem der vorherigen Ansprüche, wobei sich der zweite nachgebende Abschnitt (25) von dem ersten nachgebenden Abschnitt (23) in Form eines einzigen Kurvenprofils erstreckt.

9. Behälter (1), gemäß einem der vorherigen Ansprüche, wobei die Broschürenklammer (17) aus einem Kunststoffmaterial ausgebildet ist.

10. Behälter (1), gemäß Anspruch 9, wobei die Broschürenklammer (17) in einem Stück mit dem Behälter (1) gegossen ist.

11. Behälter (1), gemäß einem der vorherigen Ansprüche, der eine Basis (3) und einen Deckel (5) aufweist, die durch ein Gelenk (7) verbunden sind, und bei dem eine Vielzahl der Literaturklammern (17) an einer Innenfläche (15) des Deckels (5) bereitgestellt sind.

12. Behälter (1), gemäß Anspruch 11, wobei die Basis (3) eine oder mehrere Haltevorrichtungen (11) für Datenspeicherungsmedien (13) aufweist.

13. Behälter (1), gemäß einem der vorherigen Ansprüche, bei dem sich der zweite nachgebende Abschnitt (25), von einem Abschnitt des ersten nachgebenden Abschnitts (23), der am nächsten zu der Fläche (15) ist, erstreckt.

## Revendications

1. Boîtier (1) comportant au moins une pince à documentation (17) destinée à recevoir et à tenir aussi bien des livrets de documentation relativement minces que des livrets de documentation relativement épais insérés entre la pince (17) et une surface (15) du boîtier (1), la pince (17) comprenant une première partie résiliente (23) montée sur le boîtier (1) et s'étendant au-dessus du plan de ladite surface (15) dans une première direction et **caractérisé par** une deuxième partie résiliente (25) montée à une extrémité sur la première partie résiliente (23) et s'étendant entre la première partie résiliente (23) et le plan de ladite surface (15) dans une deuxième direction globalement opposée à la première direction, de sorte que, dans un état de repos, au moins une partie de la deuxième partie résiliente se trouve plus près du plan de ladite surface que la première partie résiliente, moyennant quoi, quand un livret relativement mince est inséré entre la pince (17) et ladite surface (15), la deuxième partie résiliente (25) est déviée de manière telle qu'une face du livret n'est mise en contact qu'avec la deuxième partie résiliente (25), et, quand un livret relativement épais est inséré entre la pince (17) et ladite surface (15), la deuxième partie résiliente (25) est déviée de manière telle qu'une face du livret est mise en contact à la fois avec les première et deuxièmes parties résilientes (23, 25), lesquelles première et deuxièmes parties résilientes fournissent ensemble une surface d'appui continue contre laquelle une partie supérieure dudit livret relativement épais peut glisser pendant l'insertion de ce dernier.

2. Boîtier (1) selon la revendication 1, adapté pour tenir des livrets de documentation relativement minces comprenant une feuille de papier simple ou double ou ayant une épaisseur comprise dans l'intervalle de 1 à 2 mm et adapté pour tenir des livrets de documentation relativement épais ayant une épaisseur comprise dans l'intervalle de 3 à 8 mm ou supérieure.

3. Boîtier (1) selon la revendication 2, adapté pour tenir des livrets de documentation relativement épais ayant une épaisseur allant jusqu'à 10 mm ou 15 mm ou plus.

4. Boîtier (1) selon les revendications 1, 2 ou 3, dans lequel la première partie résiliente (23) est fixée au boîtier (1) à une extrémité et comporte une première partie (23a) qui s'étend approximativement perpendiculairement au plan de ladite surface (15) et une deuxième partie (23b) qui s'étend très approximativement perpendiculairement depuis la première partie (23a) au-dessus du plan de ladite surface (15).

5. Boîtier (1) selon la revendication 4, dans lequel la première partie résiliente (23) est courbée en s'éloignant du plan de ladite surface (15) à son extrémité libre (27) pour former une entrée pour les livrets de documentation.

6. Boîtier (1) selon la revendication 5, dans lequel la première partie résiliente (23) a à peu près un profil de "S".

7. Boîtier (1) selon l'une quelconque des revendications précédentes, dans lequel la deuxième partie résiliente (25) s'étend à partir d'une région d'extrémité libre (27) de la première partie résiliente (23).

8. Boîtier (1) selon l'une quelconque des revendications précédentes, dans lequel la deuxième partie résiliente (25) s'étend à partir de la première partie résiliente (23) avec un profil à une seule courbe.

9. Boîtier (1) selon l'une quelconque des revendications précédentes, dans lequel la pince à documentation (17) est faite d'une matière plastique.

10. Boîtier (1) selon la revendication 9, dans lequel la pince à documentation (17) est moulée d'un seul tenant avec le reste du boîtier (1).

11. Boîtier (1) selon l'une quelconque des revendications précédentes, comportant une base (3) et un couvercle (5) connectés par une articulation (7), une pluralité desdites pinces à documentation (17) étant prévue sur une surface intérieure (15) du couvercle (5).

12. Boîtier (1) selon la revendication 11, dans lequel la base (3) comporte un ou plusieurs dispositifs de retenue (11) pour des supports de stockage de données (13).

13. Boîtier (1) selon l'une quelconque des revendications précédentes, dans lequel la deuxième partie résiliente (25) s'étend à partir d'une partie de la première partie résiliente (23) qui est la plus proche de ladite surface (15).
